**Europäisches Patentamt**

**European Patent Office**

**Office européen des brevets**

(11) Publication number: **0 055 096**
**B1**

# EUROPEAN PATENT SPECIFICATION

(45) Date of publication of patent specification: **12.11.86**

(21) Application number: **81305953.2**

(22) Date of filing: **18.12.81**

(51) Int. Cl.⁴: **B 23 D 25/04** // B23D36/00

(54) **Shearing machine.**

(30) Priority: **20.12.80 JP 181080/80**

(43) Date of publication of application:
**30.06.82 Bulletin 82/26**

(45) Publication of the grant of the patent:
**12.11.86 Bulletin 86/46**

(84) Designated Contracting States:
**DE GB**

(56) References cited:
**DE-A-2 915 503**
**FR-A-2 304 431**
**GB-A-1 143 648**
**US-A-3 292 472**
**US-A-3 581 616**
**US-A-4 191 078**

(73) Proprietor: **Kabushiki Kaisha Meidensha**
**1-17, Ohsaki 2-chome**
**Shinagawa-ku Tokyo 141 (JP)**

(72) Inventor: **Ishigami, Hideo**
**9-14, Minamiikuta 2-chome**
**Tama-ku Kawasaki-shi Kanagawa-ken (JP)**
Inventor: **Tohei, Nobuo**
**734-15, Tokura**
**Mishima-shi Shizuoka-ken (JP)**

(74) Representative: **Nettleton, John Victor et al**
**Abel & Imray Northumberland House 303-306**
**High Holborn**
**London, WC1V 7LH (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The present invention relates generally to a shearing machine, and more specifically to a shearing machine used to cut off material being continuously fed into predetermined lengths.

In an electric-welded tube manufacturing installation which can mass-produce, for instance, relatively thin-walled and relatively small-diameter electric-welded tubes, there is generally a shearing machine at the last manufacturing stage which can cut material into predetermined dimensions while the material to be cut is being continuously fed in a straight line.

As the above-mentioned shearing machine, a scotch-yoke type is well known, in which a rotating arm is used to move a movable cutter downward to cut off material and to move a pair of fixed and movable cutters horizontally. In this case, it is necessary to synchronize the horizontal speed of the cutters with the horizontal speed of the material to be cut at least during the cutting period, in order to prevent the cutters from being broken.

In such a shearing machine, however, since the circular motion of the rotating arm is not constant in the horizontal direction speed, it is necessary to adjust the revolution speed of the driving motor at short time intervals by using an appropriate speed adjusting device. In order to achieve sufficiently accurate speed control by a motor, it is necessary to use a motor with a relatively large capacity rating.

Additionally, in this case, there exist some functional limitations, such as, on the depth of cutting and the length of material to be cut.

US—A—3 581 616 discloses an apparatus for high speed cutting of light gauge steel which comprises single or plural sets of eccentric cams for the vertical movement of a press bed, and a mechanism for the reciprocal sliding of a slide base carrying a dieset enclosing a cutting blade. The speed of the material to be cut and the position of the dieset at the time of cutting are measured and the measured values are used to adjust the speed at which the eccentric cams are driven.

To overcome these problems another shearing machine has been employed in which a double-acting hydraulic cylinder device controlled independently by electromagnetic valves is used for moving the movable cutter downward to cut off the work material. In this shearing machine, however, since the electromagnetic valves entail a response delay, when the material to be cut is fed at a high speed, it is practically impossible to cut the material accurately into an appropriate length.

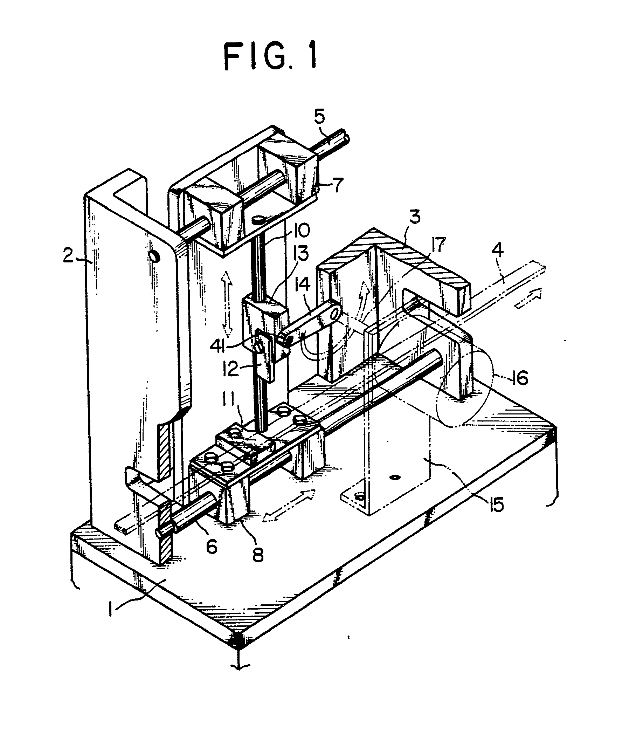

A more detailed description of the representative prior-art shearing machine will be made with reference to Fig. 1 of the attached drawings.

With these problems in mind therefore, it is an object of the present invention to provide a shearing machine for cutting off material, being continuously fed at a constant high speed in a straight line, into short lengths which requires adjustment of the revolution speed of the driving motor only within a relatively small range, in other words, which requires only a small driving motor.

The invention as claimed provides a shearing machine having a movable cutter and a fixed cutter coacting to cut off a continuously fed material into given lengths, said machine including:

an adjustable-speed motor having a drive shaft, for driving the shearing machine;

at least one guide rod to guide the movable and fixed cutters in a direction generally parallel to the feed path of the continuously fed material; and

a travelling assembly reciprocable along said guide rod, for fixedly supporting said fixed cutter thereon and for slidably supporting the movable cutter thereon;

characterized in that

said movable cutter is moved by a double-acting hydraulic cylinder attached to said travelling assembly in the direction substantially perpendicular to the fed path of the continuously fed material; said double-acting hydraulic cylinder is driven by a two-way rotary valve opened or closed by said adjustable-speed motor to charge or discharge a working fluid into or from said double-acting hydraulic cylinder; and said travelling assembly including said fixed cutter is moved by a reciprocating mechanism driven by said adjustable speed motor along said guide rod in coordination with and at substantially the same cyclical period as movement of said double-acting hydraulic cylinder.

The advantages offered by the invention are mainly that it is possible to synchronize accurately the horizontal speed of the travelling assembly with the feed speed of the material to be cut during the shear cycle and to cut the material into short lengths with relatively low power.

One way of carrying out the invention is described in detail below with reference to drawings which illustrate only one specific embodiment, in which like reference numerals designate corresponding elements and in which:

Fig. 1 is a fragmentary perspective view showing a representative prior-art shearing machine used to cut off material being continuously fed into predetermined lengths;

Fig. 2 is a front view partly in section of a shearing machine according to the present invention;

Fig. 3 is a fragmentary plan view of the shearing machine according to the present invention;

Fig. 4 is a cross-sectional view taken along the lines IV—IV in Fig. 2;

Fig. 5 is a cross-sectional view taken along the lines V—V in Fig. 4;

Fig. 6 is a cross-sectional view taken along the lines VI—VI in Fig. 4;

Fig. 7 is a cross-sectional view taken along the lines VII—VII in Fig. 4; and

Fig. 8 is a cross-sectional view taken along the lines VIII—VIII in Fig. 4.

First, a brief reference will be made to a representative prior art shearing machine used to cut off material being continuously fed into predetermined lengths, with reference to the attached drawings.

In a pipe manufacturing installation for mass-producing, for instance, relatively thin-walled and relatively small-diameter electric-welded tubes, there is generally a shearing machine at the last stage of manufacture which can cut off material into predetermined lengths while the material is continuously being fed in a straight line at a constant speed.

It is well known to use a shearing machine of the scotch-yoke type for the above-described purpose. As shown in Fig. 1, in a shearing machine of this type, two horizontal guide rods 5 and 6, each extending in the direction parallel to the feed direction of a strip of a material 4 to be cut, are supported so as to be spaced apart by two support frames 2 and 3 vertically fixed to a base frame 1. A pair of horizontally-travelling members 7 and 8 are slidably fitted to the two horizontal guide rods 5 and 6 respectively. A movable cutter guide rod of a spline axle 10 extending in the direction perpendicular to the feed direction of the material 4 to be cut is supported between the two horizontally-travelling members 7 and 8. A cutter holder 13, having a movable cutter 12 fixed thereon, is fitted to the movable cutter guide rod 10 so as to be movable up and down. A fixed cutter 11 is fixed to the lower travelling member 8. Therefore, the fixed cutter 11 can move horizontally along the horizontal guide rod 6, and the movable cutter 12 can also move horizontally with the vertical cutter guide rod 10 and vertically along the vertical cutter guide rod 10.

To drive both the above-mentioned movable and fixed cutters 12 and 11 horizontally and/or vertically, there is provided a swivel arm 14 rotating in a vertical plane parallel to the line along which the material to be cut is continuously fed, one end of which is rotatably supported by the cutter holder 13 and the other end of which is fixedly supported by the drive shaft 17 of an adjustable speed motor 16 fixed to a motor support frame 15 disposed basically perpendicular to the base frame 1.

In the prior-art shearing machine thus constructed, therefore, when the swivel arm 14 is rotated counterclockwise (in Fig. 1) by the motor 16, the movable cutter 12 moves up and down with respect to the fixed cutter 11 to shear off the material 4 to be cut, and also both the movable and fixed cutters 12 and 11 move reciprocally along the line in which the material 4 to be cut is fed. On the other hand, the material 4 to be cut is fed at roughly a constant feed speed horizontally by another conveying device (not shown).

In this case, even if the speed of the vertical movement of the movable cutter 12 varies during a single cutting cycle, this may be allowed from the standpoint of prevention of damage to the cutters; however, if the speed of the horizontal movement of the movable and fixed cutters 12 and 11 varies during the cutting cycle, it may be impossible to cut the moving material without damaging the cutters. In other words, it is necessary to match the speed of the cutters to that of the material, at least during actual shearing.

As the swivel arm 14 rotates in a constant circular motion, the horizontal speed of the cutters, that is, the horizontal component of the motion of the pivot pin 41 of the swivel arm 14 follows a cosine curve. Therefore, it is necessary to continuously vary the instantaneous revolution speed of the motor 16 so that the horizontal speed component of the cutters may match the constant horizontal speed of the material to be cut at least while the cutters are shearing the material. For instance, in the case where one-quarter revolution of the swivel arm 14 is required to shear off the material, it is necessary to continuously and accurately adjust the revolution speed of the motor through more than 40 percent in a very short period via an electrical motor speed adjusting device (not shown).

Thus, a relatively powerful motor 16 must be used to ensure accurate speed control; the cut depth, in other words, the stroke of the movable cutter 12 is severely limited; and the speed adjustment range increases with the increasing depth of cut; the minimum length to which the material can be cut is limited.

To overcome these problems mentioned above, there is commonly employed another shearing machine in which two independent driving means are used, one for moving the cutters horizontally in the feed direction of the material to be cut and the other for moving the movable cutter vertically in the direction perpendicular thereto. In this case, usually, a double-acting hydraulic cylinder movable horizontally together with the movable and fixed cutters is used only to move the movable cutter vertically to cut the material. In this case, usually the double-acting hydraulic cylinder is controlled by electromagnetic valves which switch between charging a working fluid thereinto or discharging the fluid therefrom. In this prior-art shearing machine, however, since the hydraulic cylinder is irregularly delayed by more than 20 ms when the working fluid direction is switched by the electromagnetic valves, in the case where the speed feed of the material to be cut is about 120 m/min, it is impossible to accurately cut the material off into lengths, for instance, less than about 1.5 m.

Following the above description, reference is now made to a preferred shearing machine embodying the present invention.

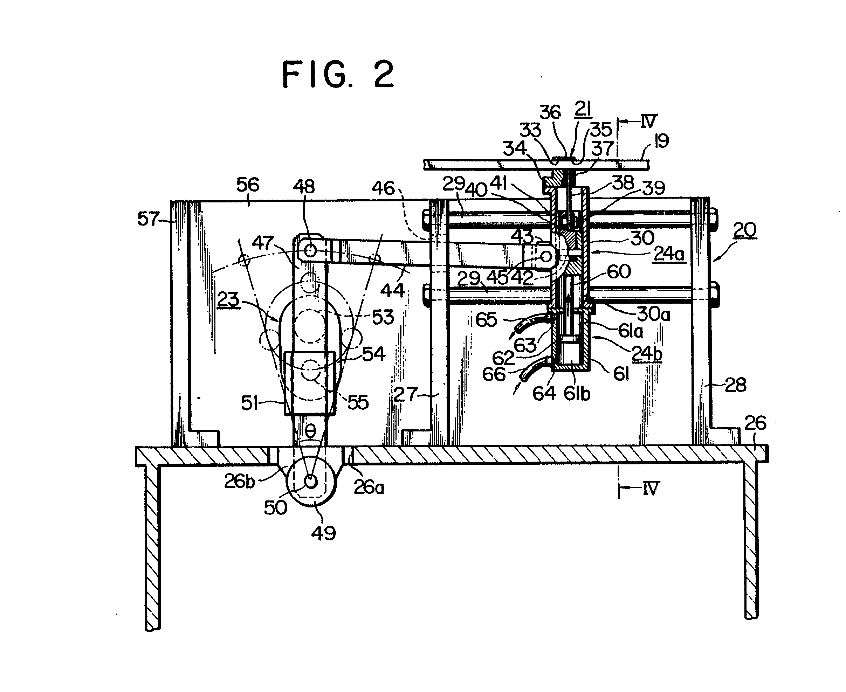

With reference to Figs. 2, 3 and 4, the shearing machine for cutting material continuously fed at a constant speed into predetermined lengths embodying the present invention mainly comprises three sections: a reciprocating mechanism section 23 (quick-return motion mechanism) driven by a motor to move the movable and fixed cutters horizontally in the feed direction, a travelling assembly (24a) and double-acting hydraulic cylinder device (24b) section 24 to drive the movable cutter vertically while being moved horizontally by the reciprocating mechanism, and a two-way rotary valve section 25 driven by a motor to control the double-acting hydraulic cylinder section by switching the direction of a working fluid charged thereinto or discharged therefrom.

In the figures, the reference numeral 26 denotes a bed, and the numeral 20 denotes a set of frames including a first rod support frame 27, a second rod support frame 28, an auxiliary support frame 57 and a bearing support frame 56.

The reference numeral 22 denotes a motor fixed to the bed 26. The motor 22 includes a drive shaft 58, one end of which is connected to a coupling 59 to drive the reciprocating mechanism section 23 and the other end of which is connected to a gear 70 to drive the two-way rotary valve section 25.

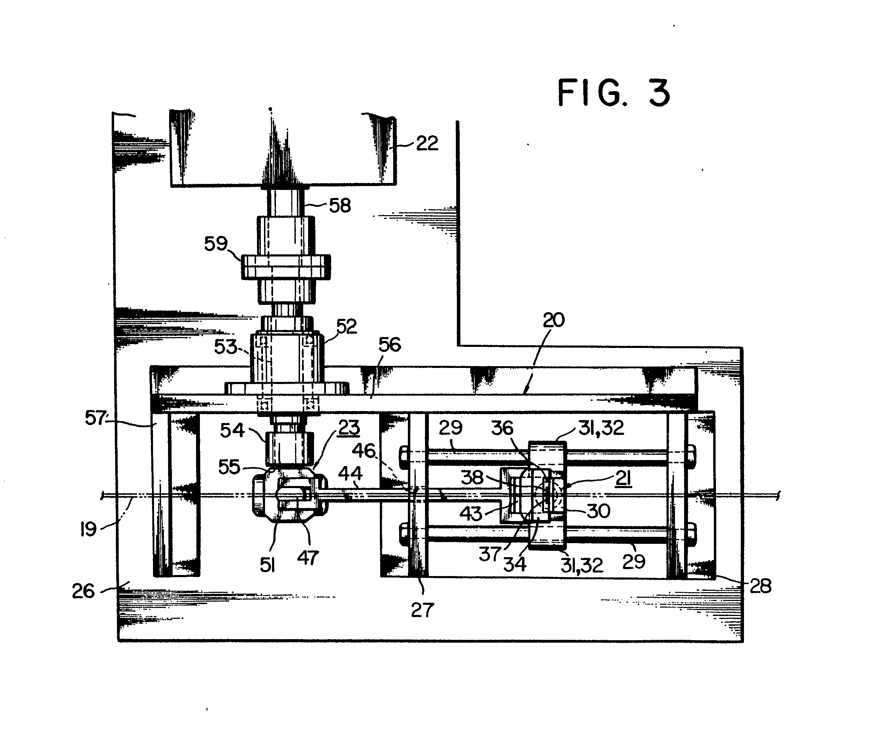

First will be described the reciprocating mechanism section 23 for moving the movable and fixed cutters horizontally in the feed direction, with reference particularly to Figs. 2 and 3.

The torque of the motor 22 is transmitted to a driven shaft 53 through the coupling 59. The drive shaft 53 is supported by a bearing case 52 fixed to the bearing support frame 56. At one end of the drive shaft 53 there is fixed a crank lever 54 rotatable about the center of the drive shaft 53. To the outer end of the crank lever 54 there is provided an axle 55 to which a flying slide 51 is fitted. Through the flying slide 51 there is passed a slide link 47 rotatably supported by an axle 50 fixed to a angled portion 26b projecting from a hole 26a formed in the bed 26. In Fig. 2, the numeral 49 denotes a bearing bracket for supporting the slide link 47 on the angled portion.

Therefore, when the drive shaft 53 rotates, the crank lever 54 also rotates to move the flying slide 51 up and down, so that the slide link 47 oscillates within the range, shown by the dotted and dashed lines in Fig. 2, determined by the tangents to the path of the axle 55, also in Fig. 2. These tangent positions divide the path of axle 55 into two unequal arc-lengths, the longer of which corresponds to the feed direction of the material 19 and the shorter of which constitutes a quick-return stroke of the reciprocating mechanism 23. To one end of the slide crank 47 there is connected a connecting link 44 passing through a slot 46 in the rod support frame 27 to move the travelling assembly and double-acting cylinder section 24 horizontally to which a set of movable and fixed cutters are attached. The reciprocating mechanism thus constructed is called a slider crank mechanism, a type of a quick-return mechanism.

Next will be described the travelling assembly and double-acting hydraulic cylinder section 24.

On the bed 26 there are vertically disposed a pair of rod supporting frames 27 and 28 being appropriately spaced apart from each other in the feed direction. To these rod supporting frames 27 and 28 there are fixed a plurality of guide rods 29 (four guide rods in the figures) extending in the feed direction, being appropriately spaced apart from each other in the direction perpendicular to that of material feed, and parallel to each other. On the guide rods 29 there is disposed a cylindrical travelling case 30 extending vertically or perpendicular to the material feed direction at a position roughly midway therebetween. The cylindrical travelling case 30 is supported, so as to be slidable in the material feed direction, by a guide block 31 projecting horizontally at the upper position and by another guide block 32 projecting horizontally at the lower position. At the top of the travelling case 30, there is fixed a fixed cutter holder 34 having a hole 33, through which the material 19 to be cut is passed, projecting from the top end of the rod supporting frames 27 and 28. The fixed cutter holder 34 is a part of a cutter portion 21, to which a fixed cutter 36 having a hole 35 in the same shape as that of the hole 33 is fixed. In the body of the fixed cutter 36, there is formed a movable cutter insertion hole 37 communicating with the hole 35 and extending in the longitudinal direction of the travelling case 30. The cutting edge of the movable cutter 38 can be inserted into the movable cutter insertion hole 37 in order to cut the material 19 in cooperation with the fixed cutter 36. The base portion of the movable cutter 38 is fixed to the movable cutter holder 40 by a bolt 39. The movable cutter holder 40 is inserted into a hole formed in the central portion of a cylindrical movable axle 41, which is slidably fitted to the bore of the travelling case 30, and is fixed there by a pin 42. Further, the movable axle 41, as described later, is moved up and down by the double-acting hydraulic cylinder 24 attached to the other end of the travelling case 30. Near the midpoint of the above-mentioned travelling case 30, there is disposed a bracket 43 projecting toward the left as seen in Figs. 2 and 3. One end of the connecting link 44 of a slider crank mechanism of the quick-return type, serving as the above-mentioned reciprocating mechanism 23, is pivotably fitted to the bracket 43 via a pin 45.

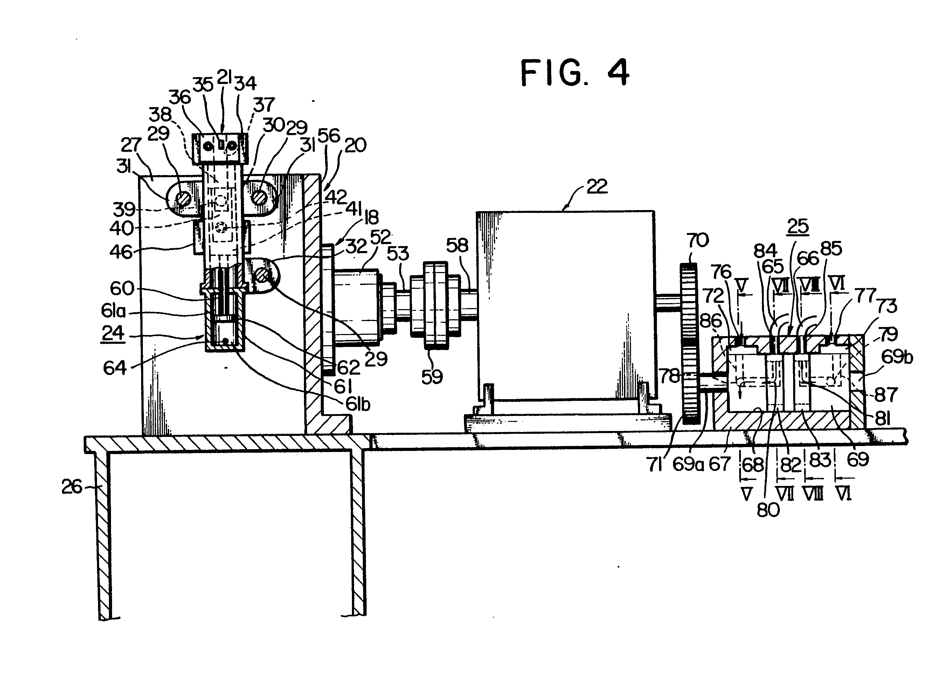

The lower end of the above-mentioned travelling case 30 is coaxially attached to the double-acting hydraulic cylinder 24. One end portion of a piston rod 60 actuable by the hydraulic cylinder 24 is connected integrally with the lower end of the movable axle 41. The base portion of the piston rod 60 is formed integrally with a piston 62 slidably inserted into a cylinder body 61. Via this piston 62, the cylinder 61 is divided into a first chamber 61a (the upper side in Figs. 2 and 4) and a second chamber 61b (the lower side in Figs. 2 and 4). A first connection pipe 65 and a second connection pipe 66 are connected to ports 63 and 64 formed through the cylinder body 61 so as to communicate with the chambers 61a and 61b in order to supply a high pressure working fluid, such as compressed air or pressurized oil, through the rotary valve 25, as described later.

Further, in Fig. 2, the reference numeral 30a denotes an air vent communicating with the atmosphere to relieve pressure due to motion of the movable axle 41 from the lower part of the travelling case 30. Further, in this embodiment, an air muffler (not shown) is attached to the outside of this air communication hole 30a, to reduce noise produced therefrom.

Briefly, when the working fluid is charged from the second connection pipe 66 into the second chamber 61b and is discharged from the first chamber 61a through the first connection pipe 65, the piston 62 moves upward, so that the movable cutter 38 shears the material 19 in cooperation with the fixed cutter 36. In contrast with this operation, when the working fluid is charged from the first connection pipe 65 into the first chamber 61a and is discharged from the second chamber 61b through the second connection pipe 66, the piston 62 moves downward, so that the movable cutter 38 is separated from the material 19. The working fluid is charged into or discharged from each chamber under the control of the two-way rotary valve 25 in coordination with the horizontal movement of the travelling case 30.

Next will be described the two-way rotary valve 25 serving to operate the double-acting cylinder, that is, to move the movable cutter up and down.

The first and second connection pipes 65 and 66 connect to the two-way rotary valve 25 driven by the motor 22. In more detail, the valve body 67 of the rotary valve 25 is mounted on the bed 26, as shown in Fig. 4. Within a rotary compartment 68 formed within this valve body 67, there is rotatably housed a roughly cylindrical spool-like rotor 69, the outer diameter of which matches the inner diameter of the rotary compartment 68. And, at either end of the rotor 69, there are integrally provided axle portions 69a and 69b rotatably supported by the valve body 67, and to the axle portion 69a projecting outside of the valve 25 there is fitted a driven gear 71 engaging a driving gear 70 fixed to the closer end of the rotary shaft 58 of the motor 22. Further, the gears 70 and 71 have the same diameter so that the rotary shaft 58 rotates in one-to-one synchronization with the rotor 69; however, without being limited to this, it is possible to ensure appropriate rotary synchronization by using other transmission means such as a sprocket wheel and a chain or a timing pulley and a timing belt, etc.

As depicted in Figs. 4—8, the rotor 69 is formed with a first large-diameter portion 69c having a first uniradial passage 90, a first small-diameter portion 69d having a first triradial passage 80, a second large-diameter portion 69e with a second uniradial passage 91, and a second small-diameter portion 69f with a second triradial passage 81. Further, the rotor 69 is so constructed that a first communication hole 86 formed along the axis of the rotor communicates between the first uniradial passage 90 and the first triradial passage 80 and that a second communication hole 87 formed along the axis of the rotor communicates between the second uniradial passage 91 and the second triradial passage 81. In this description, the expressions "uniradial" and "triradial" can be interpreted respectively to mean "comprising a single radius" and "comprising a plurality of separate radii".

The valve body 67 is formed with a first pressure port 76, a first drain port 78, a first small arc-shaped pressure pocket 72 communicating with the first pressure port 76, and a first large arc-shaped drain pocket 74 communicating with the first drain port 78 at the axial position where the first large-diameter portion 69c of the rotor is located.

Further, the valve body 67 is formed with a first output port 84 and a first annular pocket 82 between the exterior of the first small-diameter portion 69d and the interior of the body 67 communicating with the first output port 84 at the axial position where the first small-diameter portion 69d of the rotor is located.

Further, the valve body 67 is formed with a second pressure port 77, a second drain port 79, a second small arc-shaped pressure pocket 73 communicating with the second pressure port 77 and a second large arc-shaped drain pocket 75 communicating with the second drain port 79 at the axial position where the second large-diameter portion 69e of the rotor is located.

Furthermore, the valve body 67 is formed with a second output port 85 and a second circular pocket 83 communicating with the second output port 85 at the axial position where the second small-diameter portion 69f of the rotor is located.

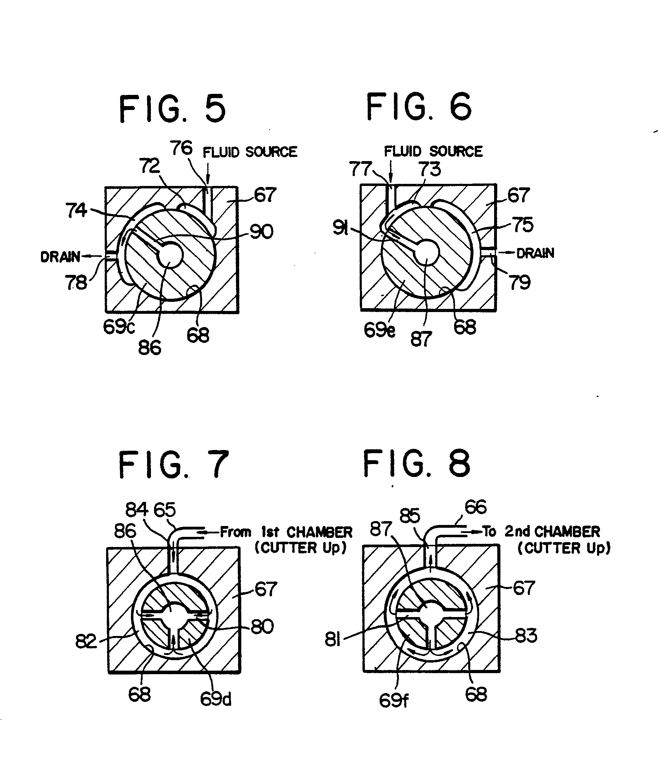

The pressure pockets 72 and 73, the drain pockets 74 and 75, and the uniradial passages 90 and 91 are radially dimensioned and positioned such that when either passage communicates with the corresponding pressure pocket, the other passage communicates with its corresponding drain pocket, and the drain pockets 74 and 75 cover more of the circumference of the rotary valve 25 than the pressure pockets 72 and 73, as shown in Figs. 5 and 6.

The first and second pressure ports 76 and 77 are connected to a high-pressure working fluid source (not shown).

The first output port 84 is connected to the first chamber 61a of the double-acting hydraulic cylinder through a first connection pipe 65, and the second output port 85 is connected to the second chamber 61b of the double-acting hydraulic cylinder through a second connection pipe 66.

Now follows a description of the operation of the shearing machine thus constructed according to the present invention:

In order to shear a continuously-fed material with the shearing machine, the material 19 to be cut first passes through the hole 33 formed in the fixed cutter holder 34 and the hole 36 of the fixed cutter 36. Next, the reciprocating mechanism 23 is operated by the adjustable-speed motor 22 at an oscillation rate according to the material feeding speed. When the connecting link 44 of the reciprocating mechanism 23 moves horizontally, the travelling case 30 and the double-acting cylinder 24 also move together horizontally along the guide rods 29.

The rotary valve 25 is also rotated by the above-mentioned adjustable-speed motor 22 via the gears 70 and 71.

Now, there is described the operation of the two-way rotary valve 25 when the movable cutter 38 moves upward. A working fluid is fed from the high-pressure working fluid source through the second pressure port 77 of the rotary valve 25, the second pressure pocket 73, the second uniradial passage 91, the second communication hole 87, the second triradial passage 81, the second annular pocket 83 and the second output port 85, to the second connection pipe 66, and next charged into the second compartment 61b in the cylinder body 61 through the port 64. Also, the working fluid within the first compartment 61a of the cylinder body 61 is fed to the rotary valve 25 through the port 63 and the first connection pipe 65, and next discharged through the first output port 84 of the rotary valve 25, the first annular pocket 82, the first triradial passage 80, the first communication hole 86, the first uniradial passage 90, the first drain pocket 74 and the first drain port 78 into a drain tank. In response to the resulting pressure difference between the two chambers 61a and 61b, the movable axle 41 moves upward in Figs. 2 and 4, so that the movable cutter 38 engages the fixed cutter 36 to cut off the material 19. The directions in which the fluid flows through each of the elements of valve 25 are shown by the arrows in Figs. 5—8.

In this cutting step, it is necessary to synchronize the horizontal speed of the movable and fixed cutters with that of the material to be cut, at least while the cutters are shearing the material and until the movable cutter clears the material after shearing. Accordingly, the reciprocating mechanism 23 should be slightly offset in the direction of delaying the return stroke of the reciprocating mechanism 23 until after the movable cutter 38 clears the material 19. This offset can be adjusted to match material size and feed rate.

After the cutter support portion 21 is moved to the uppermost position, since the rotor 69 of the rotary valve 25 continues to be rotated by the motor 22, in contrast with the case mentioned above, the working fluid is fed from the high pressure working fluid source, through the first pressure port 76 of the rotary valve 25, the first pressure pocket 72, the first uniradial passage 90, the first communication hole 86, the first triradial passage 80, the first annular pocket 82 and the first output port 84, to the first connection pipe 65, and next charged into the first chamber 61a in the cylinder body 61 through the port 63. Also, working fluid within the second compartment 61b of the cylinder body 61 is fed to the rotary valve 25 through the port 64 and the second connection pipe 66, and next discharged through the second output port 85 of the rotary valve 25, the second annular pocket 83, the second triradial passage 81, the second communication hole 87, the first uniradial passage 91, the second drain pocket 75 and the second drain port 79 into a drain tank. In response to the resulting pressure difference, the movable axle 41 moves downward in Figs. 2 and 4, so that the movable cutter 38 separates from the fixed cutter. In this case, the directions in which the fluid flows through the elements of the rotary valve 25 are those opposite to the directions shown by the arrows in Figs. 5—8.

Further, once the movable cutter 38 is completely clear of the material 19, it is unnecessary to synchronize the horizontal speed of the movable and fixed cutters 36 and 38 with that of the material to be cut.

Further, in the movement stroke range of the travelling case 30 other than the range within which the travelling case 30 moves in synchronization with the material feed speed to shear material 19 to be cut, the working fluid within each chamber 61a or 61b of the double-acting cylinder 24 is not charged into or discharged from the cylinder, because the first uniradial passage 90 communicates with neither the first pressure port 72 nor the first drain pocket 74 in the rotary valve 25 and also because the second uniradial passage 91 communicates with neither the second pressure port 73 nor the second drain pocket 75 in the rotary valve 25. Since the movement described above is repeated, it is possible to repeatedly cut the material 19 into appropriate predetermined lengths accurately.

As described above, in the shearing machine embodying the present invention, since the cutter supporting portion is moved horizontally along a plurality of guide rods by the reciprocating mechanism driven by the motor so as to match with the feed speed of the material to be cut and is moved vertically along the travelling case by the double-acting cylinder so as to cut off the material to be cut and since the double-acting cylinder is operated by the working fluid controlled through the two-way rotary valve driven by the motor in conjunction with the movement of the reciprocating mechanism, it is possible to accurately synchronize the horizontal speed of the cutter supporting portion with the feed speed of the material to be cut during the shear cycle, and to cut the material into short lengths with relatively low power.

Further, since the two-way rotary valve is mechanically driven by the motor directly without using any electromagnetic valves, it is possible to control the double-acting hydraulic cylinder quickly without appreciable response delay, in other words, to cut the material into short lengths, accurately.

It will be understood by those skilled in the art that the foregoing description is in terms of preferred embodiments of the present invention wherein various changes and modifications may be made without departing from the spirit and scope of the invention, as is set forth in the appended claims.

## Claims

1. A shearing machine having a movable cutter (38) and a fixed cutter (36) coacting to cut off a continuously fed material (19) into given lengths, said machine including:

an adjustable-speed motor (22) having a drive shaft (53), for driving the shearing machine;

at least one guide rod (29) to guide the movable and fixed cutters (38, 36) in a direction generally parallel to the feed path of the continuously fed material; and

a travelling assembly (24a) reciprocable along said guide rod (29), for fixedly supporting said fixed cutter (36) thereon and for slidably supporting the movable cutter (38) thereon;

characterized in that

said movable cutter (38) is moved by a double-acting hydraulic cylinder (24b) attached to said travelling assembly (24a) in the direction substantially perpendicular to the fed path of the continuously fed material; said double-acting hydraulic cylinder (24b) is driven by a two-way rotary valve (25) opened or closed by said adjustable-speed motor (22) to charge or discharge a working fluid into or from said double-acting hydraulic cylinder (24b); and said travelling assembly (24a) including said fixed cutter (36) is moved by a reciprocating mechanism (23) driven by said adjustable speed motor (22) along said guide rod (29) in coordination with and at substantially the same cyclical period as movement of said double-acting hydraulic cylinder (24b).

2. A shearing machine for cutting off material being continuously fed into given lengths having a body (26) and a pair of cutters comprising a movable cutter (38) and a fixed cutter (36) as set forth in claim 1, wherein said travelling assembly (24a) comprises:

(a) a travelling case (30);

(b) a fixed-cutter holder (34) for fixedly supporting the fixed cutter (36) thereon, said fixed-cutter holder (34) being fixed to one end of said travelling case (30);

(c) a movable-cutter holder (40) for fixedly supporting the movable cutter (38) thereon;

(d) a movable axle (41) for supporting said movable-cutter holder (40), said movable axle (41) being movable within said travelling case (30) in the direction substantially perpendicular to that in which the material to be cut is continuously fed;

(e) a piston rod (60) engaged with said hydraulic cylinder (24b) and connected to said movable axle (41).

3. A shearing machine for cutting off material being continuously fed into given lengths having a body (26) and a pair of cutters comprising a movable cutter (38) and a fixed cutter (36) as set forth in claim 1 or 2, wherein said double-acting hydraulic cylinder device (24b) comprises:

(a) a cylinder body (61) provided with a first port (63) and a second port (64) into or from which a working fluid can be charged or discharged;

(b) a piston (62) connected to the movable cutter (38), said piston (62) forming a first chamber (61a) having the first port (63) and a second chamber (61b) having the second port (64).

4. A shearing machine for cutting off material being continuously fed into given lengths having a body (26) and a pair of cutters comprising a movable cutter (38) and a fixed cutter (36) as set forth in claim 1, 2 or 3, wherein said reciprocating mechanism (23) comprises:

(a) a crank lever (54), one end of which is fixed to said drive shaft (53) of said adjustable-speed motor (22),

(b) a flying slide (51) rotatably supported at the other end of said crank lever (54);

(c) a slide link (47) slidably fitted to said flying slide (51), one end of which is pivotably supported in position on the body (26) of the shearing machine;

(d) a connecting link (44) one end of which is rotatably connected to the other end of said slide link (47) and the other end of which is connected to said travelling assembly (24a),

whereby when said crank lever (54) rotates, said slide link (47) oscillates and said connecting link (44) is reciprocated.

5. A shearing machine for cutting off material being continuously fed into given lengths having a body (26) and a pair of cutters comprising a movable cutter (38) and a fixed cutter (36) as set forth in claim 1, 2, 3 or 4, wherein said two-way rotary valve (25) comprises:

(a) a connection to a pressurized fluid source;

(b) a rotor (69) having a first large-diameter portion (69c) with a first uniradial passage (90), a first small-diameter portion (69d) with a first triradial passage (80), a second large-diameter portion (69e) with a second uniradial passage (91), and a second small-diameter portion (69f) with a second triradial passage (81), a first communication hole (86) being formed along the axis of said rotor (69) to communicate the first uniradial passage (90) with the first triradial passage (80) and a second communication hole (87) being formed along the axis of said rotor (69) to communicate the second uniradial passage (91) with the second triradial passage (81), said rotor (69) being driven by said adjustable-speed motor (22),

(c) a valve body (67) within which said rotor (69) is rotatably supported, said valve body (67) being provided with a first pressure port (76), a first drain port (78), a first small arc-shaped pressure pocket (72) communicating with the first pressure port (76), and a first large arc-shaped drain pocket (74) communicating with the first drain port (78) at the axial position where the first large-diameter portion (69c) of said rotor (69) is located, a first output port (84) and a first circular pocket (82) communicating with the first output port (84) at the axial position where the first small-diameter portion (69d) of said rotor (69) is located, a second pressure port (77), a second drain port (79), a second small arc-shaped pressure pocket (73) communicating with the second pressure port (77), and a second large arc-shaped drain pocket

(75) communicating with the second drain port (79) at the axial position where the second large-diameter portion (69c) of said rotor (69) is located, and a second output port (85) and a second circular pocket (83) communicating with the second output port (85) at the axial position where the second small-diameter portion (69f) of said rotor (69) is located, the first (84) and second (85) output ports being respectively connected to the first (63) and second (64) ports of said hydraulic cylinder (24b) for fluid transfer therebetween, the first (76) and second (77) pressure ports being connected to the pressurized fluid source for fluid transfer therefrom; and

the first (76) and second (77) pressure ports, the first (78) and second (79) drain ports, and the first (90) and second (91) uniradial passages being radially positioned and dimensioned such that when either of the uniradial passages (90/91) communicates with the corresponding pressure port (76, 77) the other uniradial passage (91/90) communicates with its corresponding drain port (79/78), and the drain ports (78, 79) cover more of the circumference of the corresponding large-diameter portion (69e) than the pressure ports (76, 77).

**Revendications**

1. Cisaille présentant un couteau mobile (38) et un couteau fixe (36) qui collaborent pour couper en longueurs données un produit (19) qui avance de façon continue, ladite cisaille comportant:
un moteur à vitesse réglable (22) qui présente un arbre d'entrainment (53) pour entrainer la cisaille;
au moins une tige de guidage (29) pour guider le couteau mobile et le couteau fixe (38, 36) dans une direction qui est de façon générale parallèle à la trajectoire d'avance du produit qui avance de façon continue; et
un ensemble mobile (24a) à mouvement de va-et-vient le long de ladite tige de guidage (29), pour supporter, en relation fixe, ledit couteau fixe (36) sur lui et pour supporter, en relation mobile, le couteau mobile (38) sur lui;
caractérisée
en ce que ledit couteau mobile (38) est mû, par un cylindre hydraulique à double action (24b) fixé audit ensemble mobile (24a), dans la direction substantiellement perpendiculaire à la trajectoire d'avance du produit qui avance de façon continue; en ce que ledit cylindre hydraulique à double action (24b) est entrainé par un robinet à rotor à deux voies (25) ouvert ou fermé par ledit moteur à vitesse réglable (22) pour envoyer du fluide de travail dans ledit cylindre hydraulique à double action (24b) ou pour l'en évacuer; et en ce que ledit ensemble mobile (24a) incluant ledit couteau fixe (36) est mû par une mécanisme à va-et-vient (23) entrainé par ledit moteur à vitesse réglable (22) le long de ladite tige de guidage (29) en coordination avec le mouvement dudit cylindre hydraulique à double action (24b) et avec substantiellement la même période cylique que ce mouvement.

2. Cisaille pour couper en longueurs données un produit qui avance de façon continue, présentant un bâti (26) et une paire de couteaux comprenant un couteau mobile (38) et un couteau fixe (36) comme indiqué dans la revendication 1, caractérisée en ce que ledit ensemble mobile (24a) comporte:
(a) un boitier mobile (30);
(b) un porte-couteau fixe (34) pour supporter, en relation fixe, le couteau fixe (36) sur lui, ledit porte-couteau fixe (34) étant fixé à l'une des extrémités dudit boitier mobile (30);
(c) un porte-couteau mobile (40) pour supporter, en relation fixe, le couteau mobile (36) sur lui;
(d) un coulisseau (41) pour supporter ledit porte-couteau mobile (40), ledit coulisseau (41) pouvant se déplacer à l'intérieur dudit boitier mobile (30) dans la direction substantiellement perpendiculaire à celle dans laquelle le produit à couper avance en continu;
(e) une tige de piston (60) en contact avec ledit cylindre hydraulique (24b) et reliée audit coulisseau (41).

3. Cisaille pour couper en longueurs données un produit qui avance de façon continue, présentant un bâti (26) et une paire de couteaux comprenant un couteau mobile (38) et un couteau fixe (36) comme indiqué dans la revendication 1 ou 2, caractérisée en ce que ledit dispositif à cylindre hydraulique à double action (24b) comporte:
(a) un corps de cylindre (61) présentant un premier orifice (63) et un second orifice (64) dans lequel on peut envoyer du fluide de travail ou d'où on peut l'évacuer;
(b) un piston (62) relié au couteau mobile (38), ledit piston (62) formant une première chambre (61a) présentant le premier orifice (63) et une seconde chambre (61b) présentant le second orifice (64).

4. Cisaille pour couper en longueurs données un produit qui avance de façon continue, présentant un bâti (26) et une paire de couteaux comprenant un couteau mobile (38) et un couteau fixe (36) comme indiqué dans la revendication 1, 2 ou 3, caractérisée en ce que ledit mécanisme à va-et-vient (23) comporte:
(a) une manivelle (54) dont une extrémité est fixée audit arbre d'entrainement (53) dudit moteur à vitesse réglable (22),
(b) un coulisseau (51) supporté, avec possibilité de rotation, à l'autre extrémité de ladite manivelle (54);
(c) une bielle (47) qui coulisse sur ledit coulisseau (51) et dont l'une des extrémités est supportée, avec possibilité de pivotement, en un point du bâti (26) de la cisaille;
(d) une biellette (44) dont l'une des extrémités est reliée, avec possibilité de rotation, à l'autre extrémité de ladite bielle (47) et dont l'autre extrémité est reliée audit ensemble mobile (24a),
étant précisé que lorsque ladite manivelle (54) tourne, ladite bielle (47) oscille et ladite biellette (44) prend un mouvement de va-et-vient.

5. Cisaille pour couper en longueurs données un produit qui avance de façon continue, présentant un bâti (26) et une paire de couteaux comprenant un couteau mobile (38) et un couteau fixe (36) comme indiqué dans la revendication 1, 2, 3 ou 4, caractérisée en ce que ledit robinet à rotor à deux voies (25) comporte:

(a) une connexion à une source de fluide sous pression;

(b) un rotor (69) présentant une première portion de grand diamètre (69c) avec un premier passage uniradial (90), une première portion de petit diamètre (69d) avec un premier passage triradial (80), une seconde portion de grand diamètre (69e) avec un second passage uniradial (91) et une seconde portion de petit diamètre (69f) avec un second passage triradial (81), un premier trou de communication (86) étant prévu le long de l'axe dudit rotor (69) pour faire communiquer le premier passage uniradial (90) avec le premier passage triradial (80) et un second trou de communication (87) étant prévu le long de l'axe dudit rotor (69) pour faire communiquer le second passage uniradial (91) avec le second passage triradial (81), ledit rotor (69) étant entrainé par ledit moteur à vitesse réglable (22),

(c) un corps de robinet (67) à l'intérieur duquel ledit rotor (69) est supporté avec possibilité de rotation, ledit corps de robinet (67) présentant un premier orifice sous pression (76), un premier orifice de décharge (78), une première petite chambre sous pression en forme d'arc (72) communiquant avec le premier orifice sous pression (76), et une première grande chambre de décharge en forme d'arc (74) communiquant avec le premier orifice de décharge (78) à la position axiale où est située la portion de grand diamètre (69c) dudit rotor (69), un premier orifice de sortie (84) et une première chambre circulaire (82) communiquant avec le premier orifice de sortie (84) à la position axiale où est située la première portion de petit diamètre (69d) dudit rotor (69), un second orifice sous pression (77), un second orifice de décharge (79), une seconde petite chambre sous pression en forme d'arc (73) communiquant avec le second orifice sous pression (77), et une seconde grande chambre de décharge en forme d'arc (75) communiquant avec le second orifice de décharge (79) à la position axiale où est située la seconde portion de grand diamètre (69c) dudit rotor (69), et une second orifice de sortie (85) et une seconde chambre circulaire (83) communiquant avec le second orifice de sortie (85) à la position axiale où est située la seconde portion de petit diamètre (69f) dudit rotor (69), le premier (84) et le second (85) orifices de sortie étant respectivement reliés au premier (63) et au second (64) orifices dudit cylindre hydraulique (24b) pour permettre le transfert du fluide entre eux, le premier (76) et le second (77) orifices sous pression étant reliés à la source de fluide sous pression pour permettre le transfert du fluide qui en provient; et

le premier (76) et le second (77) orifices sous pression, le premier (78) et le second (79) orifices de décharge et le premier (90) et le second (91) passages uniradiaux étant placés radialement et dimensionnés de façon telle que lorsque l'un ou l'autre des passages uniradiaux (90/91) communique avec l'orifice sous pression correspondant (76/77), l'autre passage uniradial (91/90) communique avec son orifice de décharge correspondant (79/78) et que les orifices de décharge (78, 79) couvrent une plus grande partie de la circonférence de la portion de grand diamètre correspondante (69e) que les orifices sous pression (76, 77).

**Patentansprüche**

1. Schere mit einem bewegbaren Messer (38) und einem feststehenden Messer (36), die zum Zerschneiden eines kontinuierlich zugeführten Materials (19) in bestimmte Längen zusammenwirken, mit:

einem Motor (22) mit einstellbarer Drehzahl und einer Antriebswelle (53) zum Antrieb der Schere; mindestens einem Führungsstab (29) zum Führen des bewegbaren und des feststehenden Messers (38, 36) in einer allgemein zum Zuführweg des continuierlich zugeführten Materials parallelen Richtung; und

einer längs des Führungsstabes (29) hin- und herbewegbaren Schieberanordnung (24a) um daran fest das feste Messer (36) und gleitbar das bewegbare Messer (38) abzustützen;

dadurch gekennzeichnet, daß

das bewegbare Messer (38) durch einen an der Schieberanordnung (24a) angebrachten doppelt wirkenden Hydraulikzylinder (24b) in der Richtung im wesentlichen senkrecht zu dem Zuführweg des kontinuierlich zugeführten Materials bewegt wird; wobei der doppelt wirkende Hydraulikzylinder (24b) durch ein 2-Wege-Drehventil (25) angesteuert ist, das durch den Motor (22) mit einstellbarer Drehzahl zum Laden oder Entladen eines Arbeitsfluids in oder aus dem doppelt wirkenden Hydraulikzylinder (24b) geöffnet bzw. geschlossen wird; und daß die Schieberanordnung (24a) einschließlich dem festen Messer (36) durch einen Hin- und Herbewegemechanismus (23) bewegt ist, der durch den Motor (22) mit einstellbarer Drehzahl längs des Führungsstabes in Koordinierung mit und mit im wesentlichen der gleichen Umlaufperiode wie die der Bewegung 'des doppelt wirkenden Hydraulikzylinders (24b) angetrieben wird.

2. Messer zum Abschneiden kontinuierlich zugeführten Materials in bestimmte Längen, mit einem Gehäuse (26) und zwei Messern, die ein bewegbares Messer (36) und ein festes Messer (36) enthalten, nach Anspruch 1, bei dem die Schieberanordnung (24a) enthält:

a) Ein Schiebergehäuse (30);

b) einen Halter (34) für das feste Messer, um das feste Messer (36) daran festgelegt abzustützen, wobei der Halter (34) für das feste Messer an einem Ende des Schiebergehäuses (30) befestigt ist;

c) einen Halter (40) für das bewegbare Messer, um das bewegbare Messer (38) daran fest abzustützen;

d) eine bewegbare Achse (41) zum Abstützen des Halters (40) für das bewegbare Messer, wobei die bewegbare Achse (41) innerhalb des Schiebergehäuses (30) in der Richtung im wesentlichen senkrecht zu der, in der das zu zerschneidende Material kontinuierlich zugeführt wird, bewegbar ist; und

e) eine in Eingriff mit dem Hydraulikzylinder (24b) befindliche und mit der bewegbaren Achse (41) verbundene Kolbenstange (60).

3. Schere zum Zerschneiden kontinuierlich zugeführten Materials in bestimmte Längen, mit einem Gehäuse (26) und einem Messerpaar, das ein bewegbares Messer (38) und ein feststehendes Messer (36) umfaßt, nach Anspruch 1 oder 2, bei dem das doppelt wirkende Hydraulikzylinder-Gerät (24b) enthält:

a) Ein mit einer ersten Anschlußöffnung (63) und einer zweiten Anschlußöffnung (64), in die oder aus der ein Arbeitsfluid eingelassen bzw. ausgelassen werden kann, versehenes Zylindergehäuse (61); und

b) einen mit dem bewegbaren Messer (38) verbundenen Kolben (62), der eine erste Kammer (61a) mit der ersten Anschlußöffnung (63) und eine zweite Kammer (61b) mit der zweiten Anschlußöffnung (64) bildet.

4. Messer zum Abschneiden kontinuierlich zugeführten Materials in bestimmte Längen, mit einem Gehäuse (26) und einem Messerpaar mit einem bewegbaren Messer (38) und einem feststehenden Messer (36), nach Anspruch 1, 2 oder 3, bei dem der Hin- und Herbewegemechanismus (23) enthält:

a) einen Kurbelhebel (54), dessen eines Ende an der Antriebswelle (53) des Motors (22) mit einstellbarer Drehzahl befestigt ist,

b) einen drehbar an dem anderen Ende des Kurbelhebels (54) drehbar abgestützten Gleitschieber (51);

c) einen mit dem Gleitschieber (51) gleitbar zusammengepaßten Gleit-Verbindungshebel (47), dessen eines Ende schwenkbar an einer Stelle des Gehäuses (26) der Schere abgestützt ist; und

d) einen Verbindungshebel (44), dessen eines Ende drehbar mit dem anderen Ende des Gleithebels (47) verbunden und dessen anderes Ende mit der Schieberanordnung (24a) verbunden ist, wodurch beim Drehen des Kurbelhebels (54) der Gleit-Verbindungshebel (47) hin- und herschwenkt, und der Verbindungshebel (44) hin- und herbewegt wird.

5. Schere zum Abschneiden von kontinuierlich zugeführtem Material in bestimmte Längen, mit einem Gehäuse (26) und einem Messerpaar, das ein bewegbares Messer (38) und ein festes Messer (36) enthält, nach Anspruch 1, 2, 3 oder 4, bei der das 2-Wege-Drehventil (25) enthält:

a) Eine Verbindung zu einer Druckfluid-Quelle;

b) einen Rotor (69) mit einem ersten Abschnitt (69c) mit großem Durchmesser, der einen ersten Durchlaß (90) längs eines Radius enthält, einem ersten Abschnitt (69) mit kleinem Durchmesser, der einen ersten Durchlaß (80) längs dreier Radien enthält, einem zweiten Abschitt (69e) mit großem Durchmesser, der einen zweiten Durchlaß (69) längs eines Radius enthält, und einem zweiten Abschnitt (69f) mit kleinem Durchmesser, der einen zweiten Durchlaß (81) längs dreier Radien enthält, wobei eine erste Verbindungsbohrung (86) längs der Achse des Rotors (69) zur Verbindung des ersten Durchlasses (90) längs eines Radius mit dem ersten Durchlaß (80) längs dreier Radien ausgebildet ist und eine zweite Verbindungsbohrung (87) längs der Achse des Rotors (69) zur Verbindung des zweiten Durchlasses (91) längs eines Radius mit dem zweiten Durchlaß (81) längs dreier Radien ausgebildet ist, und der Rotor (69) durch den Motor (22) mit einstellbarer Drehzahl angetrieben ist,

c) ein Ventilgehäuse (67), in dem der Rotor (69) drehbar abgestützt ist, welches Ventilgehäuse (67) mit einem ersten Druckanschluß (76), einem ersten Ablaufanschluß (78), einer ersten, kleinen bogenförmigen Drucktasche (62) in Verbindung mit dem ersten Druckanschluß (76), und einer ersten großen bogenförmigen Ablauftasche (74) in Verbindung mit dem ersten Ablaufanschluß (78) an der Axialstelle, an der der erste Abschnitt (69c) mit großem Durchmesser des Rotors (69) liegt, einem ersten Auslaßanschluß (84) und einer ersten kreisförmigen Tasche (82) in Verbindung mit dem ersten Auslaßanschluß (84) an der Axialstelle, an der der erste Abschnitt (69d) mit kleinem Durchmesser des Rotors (69) liegt, einem zweiten Druckanschluß (77), einem zweiten Ablaufanschluß (79), einer zweiten kleinen bogenförmigen Drucktasche (73) in Verbindung mit dem zweiten Druckanschluß (77) und einer zweiten großen bogenförmigen Ablauftasche (75) in Verbindung mit dem zweiten Ablaufanschluß (79) an der Axialstelle, an der der zweite Abschnitt (69c) mit großem Durchmesser des Rotors (69) liegt, und einem zweiten Auslaßanschluß (85) und einer zweiten kreisförmigen Tasche (83) in Verbindung mit dem zweiten Auslaßanschluß (85) an der Axialstelle, an der der zweite Abschnitt (69f) mit kleinem Durchmesser des Rotors (69) liegt, versehen ist, wobei der erste (84) und der zweite (85) Auslaßanschluß jeweils mit dem ersten (63) bzw. dem zweiten (64) Anschluß des Hydraulikzylinders (24b) zur Fluidübertragung zwischen diesen verbunden ist, der erste (76) und der zweite (77) Druckanschluß mit der Druckfluidquelle zur Fluidübertragung von dieser verbunden ist; und

der erste (76) und der zweite (77) Druckanschluß, der erste (78) und der zweite (79) Ablaufanschluß, und der erste (90) und der zweite (91) Durchlaß längs eines Radius radial so angeordnet und so bemessen sind, daß, wenn einer der Durchlässe (90/91) längs eines Radius mit dem entsprechenden Druckanschluß (76, 77) in Verbindung steht, der andere Durchlaß (91/90) längs eines Radius mit seinem entsprechenden Ablaufanschluß (79/78) in Verbindung steht, und die Ablaufanschlüsse (78, 79) einen größeren Teil des Umfanges des entsprechenden Abschnittes (69e) mit großem Durchmesser überdecken als die Druckanschlüsse (76, 77).

# FIG. 1

FIG. 2

FIG. 3

FIG. 4

0 055 096

# FIG. 5

76 FLUID SOURCE
72
74
67
90
DRAIN
78
69c
86
68

# FIG. 6

FLUID SOURCE
77
73
67
91
75
DRAIN
79
69e
87
68

# FIG. 7

84 65
86
From 1st CHAMBER
(CUTTER Up)
67
82
80
68
69d

# FIG. 8

85 66
87
To 2nd CHAMBER
(CUTTER Up)
67
81
83
69f
68